# EUROPEAN PATENT APPLICATION

(11) **EP 4 571 707 A1**
(43) Date of publication of application: **18.06.2025**
(21) Application number: 23939681.5
(22) Date of filing: 01.06.2023
(51) Int. Cl.: G08G 1/16

(54) **VEHICLE CONTROL SYSTEM**

(71) Applicant: Hitachi Astemo, Ltd., Ibaraki 312-8503 (JP)
(72) Inventor: OKUYAMA, Fumihiko, Hitachinaka-shi, Ibaraki 312-8503 (JP); AKIMOTO, Yutaka, Hitachinaka-shi, Ibaraki 312-8503 (JP)
(74) Representative: Nordmeyer, Philipp Werner
(86) International application number: PCT/JP2023/020394
(87) International publication number: WO 2024/247206

(57) **Abstract**

This vehicle control system comprises: a detection unit (11) that detects the operation of a vehicle by a driver; a surroundings sensing unit (12) that senses the conditions in the surroundings of the vehicle; and a control unit (13) that includes a travel control unit (130) that controls the travel of the vehicle in accordance with the operation of the vehicle, a driving assistance determination unit (131) that determines the necessity of driving assistance for the driver in accordance with the conditions in the surroundings of the vehicle, and a driving assistance execution unit (132) that causes driving assistance to be executed in accordance with the determination results of the driving assistance determination unit. The control unit (13) includes a driving assistance adjustment unit (134) that records and analyzes the execution status of the driving assistance execution unit (132), and adjusts the degree of driving assistance on the basis of the execution status analysis results.

## Description

### TECHNICAL FIELD

The present invention relates to a vehicle control system and the like.

### BACKGROUND ART

In advanced driver-assistance systems (ADAS) such as forward collision warning (FCW), in order to achieve safety and comfort of a driver, a pedestrian, and the like, uses various sensors in a vehicle to grasp a surrounding condition and provides accurate displays and warnings to the driver, or assists the driver in operating a steering wheel, a brake, or the like.

As one of the FCWs, a vehicle obstacle detection device that detects an obstacle present in front of a host vehicle using a radar and performs a safety confirmation such as automatic control to avoid danger occurring in the vehicle is known in the related art.

For example, as described in paragraphs [0006] to [0010] and FIG. 1, Patent Literature 1 describes a vehicle obstacle detection device that uses a vehicle estimation trajectory calculation device that calculates an estimated traveling trajectory along which a vehicle is estimated to travel from a current steering angle or the like, a camera that captures a road condition (white line and object), and a radar device that detects an object in front of the vehicle to determine whether an object on the estimated traveling trajectory is a dangerous obstacle and whether the object on a road is a dangerous obstacle based on the grasped estimated traveling trajectory, the road, and object. The vehicle obstacle detection device further includes a warning unit that gives a driver of the vehicle a warning of a degree corresponding to severity of the danger.

### CITATION LIST

### PATENT LITERATURE

Patent Literature 1: JP2004-110394A

### SUMMARY OF INVENTION

### TECHNICAL PROBLEM

Incidentally, drivers have different driving skills due to factors such as concentration and response ability (reflexes). When it is assumed that vehicles are driven in the same road environment, a driver having high driving skills drives the vehicle in a way that does not cause warnings to be issued, whereas a driver having low driving skills engages in dangerous driving that results in many warnings.

For this reason, it is preferable to strengthen (or advance) the warning for the driver who drives dangerously, and to implement driving that will not cause a warning to be issued. In other words, it is preferable that the warning to the driver by the ADAS is executed according to a driver characteristic (for example, a habit, a character, concentration, an age, reflexes, and the like). Further, it is difficult for a sensor to grasp the road condition depending on a road environment (nighttime or the like) at a specific place, and an unnecessary warning may be erroneously issued. In other words, accuracy of the warning is preferably high.

In Patent Literature 1 described above, these problems are not mentioned at all, and there is no suggestion about a countermeasure therefor.

An object of the present invention is to provide a vehicle control system capable of issuing an accurate warning according to a driver characteristic. Another object of the present invention will become apparent to a person skilled in the art by referring to an aspect and a preferred embodiment described below and the accompanying drawings.

### SOLUTION TO PROBLEM

In order to easily understand an outline of the present invention, an aspect according to the present invention will be described below.

In a first aspect, a vehicle control system includes:
a detection unit configured to detect an operation of a driver on a vehicle;
a surrounding sensing unit configured to sense a condition of surroundings of the vehicle; and
a control unit including a travel control unit that controls travel of the vehicle in response to the operation on the vehicle, a driving assistance determination unit that determines necessity of driving assistance to the driver according to the condition of the surroundings of the vehicle, and a driving assistance execution unit that executes the driving assistance according to a determination result of the driving assistance determination unit, in which
the control unit includes a driving assistance adjustment unit that records and analyzes an execution status of the driving assistance execution unit and adjusts a degree of the driving assistance based on an analysis result of the execution status.

According to the first aspect, the control unit (driving assistance adjustment unit) records and analyzes the execution status (for example, the number-of-times of executions) of the driving assistance executed by the driving assistance execution unit, and adjusts the degree of the driving assistance based on the analysis result of the execution status. Here, the "driving assistance" is, for example, a notification and/or an intervention in travel control such as automatic braking executed by the travel control unit according to the determination result of the driving assistance executed by the driving assistance determination unit. The "degree of driving assistance" refers to degrees of adjustments of an execution timing of driving assistance and/or execution intensity of driving assistance.

As described above, for example, an execution degree of the driver corresponding to the notification (warning) to the driver from the ADAS is recorded as the execution status of the driving assistance, and the degree of driving assistance is adjusted based on the analysis result, whereby the driver can be notified more accurately. Similarly, it is possible to more accurately intervene in the travel control for a driver who receives a large number of notifications (warnings). In other words, it is possible to contribute to safe driving by performing an adjustment to strengthen (advance) a warning for a driver who receives more warnings and has a strong tendency to perform dangerous driving and prompting driving such that the warning is not issued, and on the other hand, it is possible to respect own driving of a driver by performing an adjustment to weaken (delay) the warning for a driver who has a strong tendency to perform the safe driving, and it is possible to eliminate discomfort caused by unnecessary warnings.

### BRIEF DESCRIPTION OF DRAWINGS

[FIG. 1] FIG. 1 is a block diagram showing a system configuration example of a vehicle control system according to an embodiment of the present invention.
[FIG. 2] FIG. 2 is a diagram illustrating an example of a data structure of a driving assistance status recording unit in the vehicle control system according to the embodiment of the present invention, these data being recorded in a nonvolatile memory in the system.
[FIG. 3] FIG. 3 is a flowchart showing a basic processing operation of the vehicle control system according to the embodiment of the present invention.
[FIG. 4] FIG. 4 is a flowchart showing a detailed processing procedure for a "record and analysis of a driver characteristic" in a basic operation flowchart shown in FIG. 3.
[FIG. 5] FIG. 5 is a flowchart showing a detailed processing procedure for a "record and analysis of a place" in the basic operation flowchart shown in FIG. 3.
[FIG. 6] FIG. 6 is a flowchart showing a detailed processing procedure for "avoidance action determination" in the flowchart showing the detailed processing procedure for processing of the "record and analysis of a place" shown in FIG. 5.
[FIG. 7] FIG. 7 is a flowchart showing a detailed processing procedure for "comprehensive determination of a degree of execution of driving assistance" in the basic operation flowchart shown in FIG. 3.

### DESCRIPTION OF EMBODIMENTS

The best embodiment to be described below is used to easily understand the present invention. Therefore, it should be noted that a person skilled in the art does not unduly limit the present invention by an embodiment described below.

### (Configuration of Vehicle Control System)

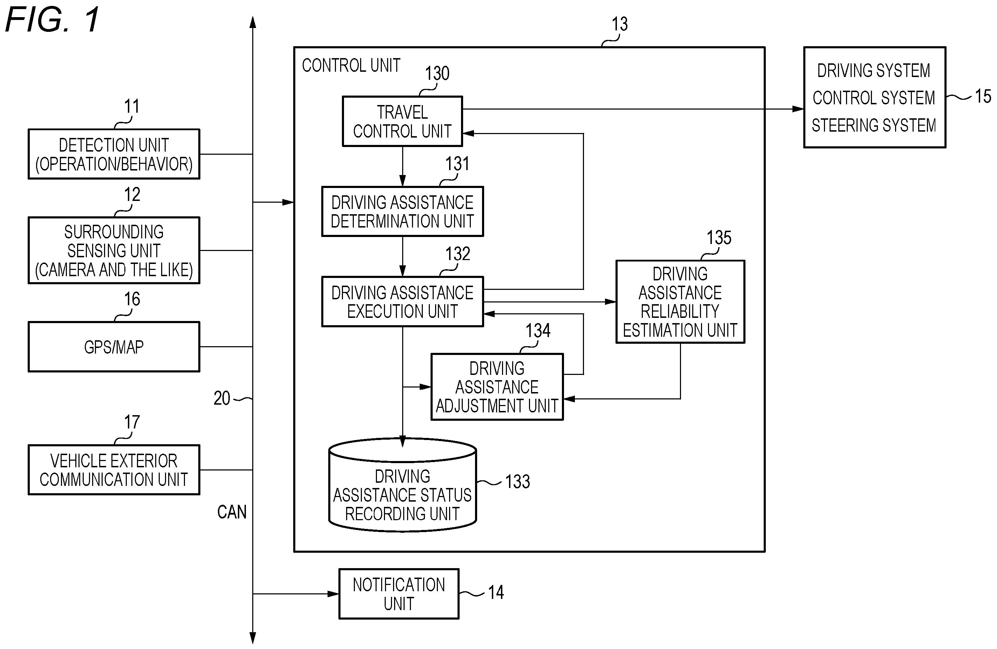

A configuration example of a vehicle control system according to an embodiment of the present invention (hereinafter referred to as the present embodiment) will be described with reference to FIG. 1.

As shown in FIG. 1, the vehicle control system according to the present embodiment includes at least a detection unit 11, a surrounding sensing unit 12, a control unit 13, and a notification unit 14. These units are commonly connected via a control area network (CAN) 20. A global positioning system (GPS), a map database (GPS/map 16), and a vehicle exterior communication unit 17 may be further connected to the CAN 20. For example, latest map information can be obtained by communicating with an external center (not shown) via the vehicle exterior communication unit 17 that complies with vehicle to X (V2X) type communication, and stored in the GPS/map 16.

The detection unit 11 is sensors that detect operation of a driver on a vehicle or a behavior of the vehicle, and includes an inertial sensor (IMU: inertial measurement unit) in addition to sensors such as an accelerator opening sensor, a brake stroke sensor, a vehicle speed sensor (wheel speed sensor), and a steering angle sensor mounted on parts of the vehicle. The inertial sensor can measure a driving condition and a posture of the vehicle (detect translational motion in three axial directions from acceleration [m/s2] and rotational motion from an angular velocity [deg/s]) using a triaxial acceleration sensor and a triaxial angular velocity sensor (gyrosensor).

The surrounding sensing unit 12 is, for example, a camera that senses a condition of surroundings of the vehicle. The GPS/map 16 is used when the control unit 13 acquires a map coordinate when analyzing a place to be described later, and the vehicle exterior communication unit 17 is used when the control unit 13 records predetermined information to be described later in a cloud DB.

The control unit 13 is a block that serves as a control center that executes driving assistance by an ADAS, such as a forward collision warning (FCW). Therefore, the control unit 13 includes at least a travel control unit 130, a driving assistance determination unit 131, a driving assistance execution unit 132, and a driving assistance adjustment unit 134.

The travel control unit 130 has a function of controlling travel of the vehicle in response to the operation of the driver on the vehicle, analyzes information based on signals from the sensors mounted on the units of the vehicle, and mainly controls a vehicle mechanism unit 15 including torque adjustment (driving system) from an engine, brake operation (braking system), and steering operation (steering system) in operations such as starting, stopping, and turning of the vehicle.

The driving assistance determination unit 131 has a function of determining necessity of the driving assistance to the driver according to the condition of the surroundings of the vehicle. The driving assistance determination unit 131 determines necessity of notification to the driver and intervention (forcible control) in travel control contributing to the traveling according to the condition of the surroundings of the vehicle such as an obstacle on a traveling road or a front vehicle.

The driving assistance execution unit 132 has a function of executing the driving assistance according to a determination result of the driving assistance determination unit 131. In other words, according to the determination result of the driving assistance determination unit 131, the driving assistance execution unit 132 executes the notification (warning) to the driver according to the condition of the surroundings of the vehicle and the intervention (forcible control) in the travel control contributing to the traveling.

The driving assistance adjustment unit 134 has a function of recording an execution status of the driving assistance executed by the driving assistance execution unit 132 (for example, a total (lifetime) number-of-times of executions or the latest number-of-times of executions of FCW), analyzing the execution status, and adjusting an execution timing or execution intensity of the notification (warning) and the intervention in the travel control performed by the travel control unit (advancing or delaying an execution timing or strengthening or weakening the execution intensity) based on an analysis result of the execution status.

The control unit 13 further includes a driving assistance status recording unit 133 that records the execution status of the driving assistance executed by the driving assistance execution unit 132. The driving assistance status recording unit 133 records information on a type and frequency of an executed ADAS function, the presence or absence of an avoidance action after the execution (the presence or absence of depression of a brake or a course change, opening or closing of an accelerator, or the like), and an execution place (where and from which direction the vehicle has traveled).

For example, in the case of the FCW, information necessary for an analysis of a driver characteristic such as a total (lifetime) number-of-times of executions of the FCW, the latest number-of-times of executions, and an execution rate of a travel distance (time), and information necessary for analyzing a place where a host vehicle has traveled, such as a place where the ADAS function is executed, a time, and a surrounding environment such as weather, are recorded.

Due to limitations in recording capacity, the driving assistance status recording unit 133 records all information required for analyzing the driver characteristic. However, as the information necessary for the analysis of the place, only the information of the surrounding environment of the place where the host vehicle has traveled is recorded, and a memory usage is saved.

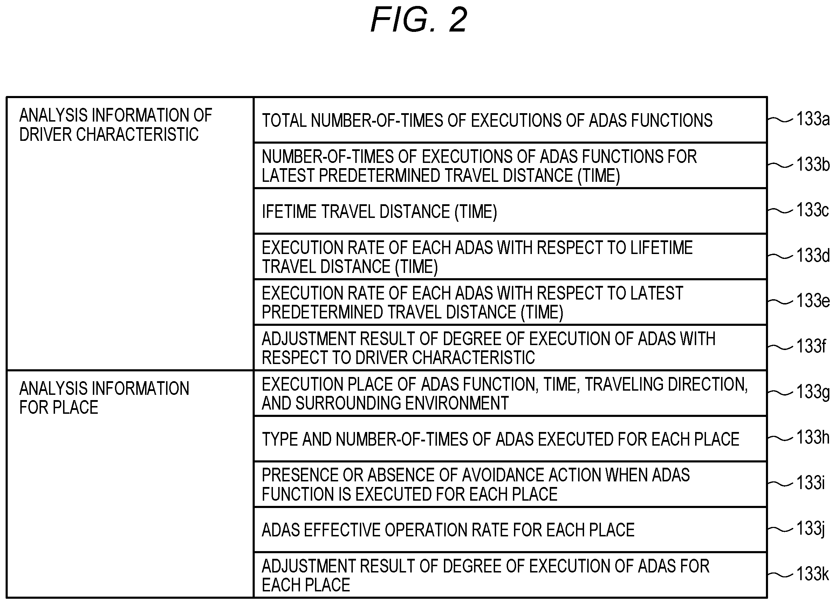

When a cloud service is used, all the information necessary for analyzing the driver characteristic and the information necessary for analyzing the place can be recorded as a cloud database (DB). An example of a data structure in this case is shown in FIG. 2.

According to FIG. 2, among data items of the cloud DB, as "analysis information of the driver characteristic", a total number-of-times of executions 133a of the ADAS functions such as autonomous emergency braking (AEB) and lane departure warning (LDW) in addition to forward collision warning (FCW), the number-of-times of executions 133b of the ADAS functions for a latest predetermined travel distance or time, a lifetime travel distance (time) 133c, an execution rate 133d of each ADAS with respect to the lifetime travel distance (time), an execution rate 133e of each ADAS with respect to the latest predetermined travel distance (time), and an adjustment result 133f of a degree of execution of the ADAS with respect to the driver characteristic can be recorded as data items.

As "analysis information for place", information 133g on the execution place of the ADAS function, a time, a traveling direction, and a surrounding environment, a type and a number-of-times 133h of the ADAS executed for each place, information 133i on the presence or absence of the avoidance action when the ADAS function is executed for each place, an ADAS effective operation rate 133j for each place, and an adjustment result 133k of a degree of execution of the ADAS for each place can be recorded as data items.

The control unit 13 may further include a driving assistance reliability estimation unit 135 that estimates reliability of the determination result of the driving assistance determination unit 131 for each place. After the driving assistance is executed by the driving assistance execution unit 132, the driving assistance reliability estimation unit 135 may estimate the reliability of the determination result of the driving assistance determination unit 131 for each place based on the presence or absence of the driver operation and the presence or absence of the behavior of the vehicle. The reliability here refers to a driving assistance execution success or failure rate obtained by dividing the number-of-times of avoidance actions by the number-of-times of executions.

The notification unit 14 is, for example, a display, a speaker, or the like that notifies the driver of danger by a display, a sound, or the like when there is a high possibility of collision with a front obstacle. In the case of a two-wheeled vehicle, when the vehicle approaches the front obstacle and a risk of collision increases, a physical sensation may be sensed by a vibrator or the like.

### (Operation of Vehicle Control System)

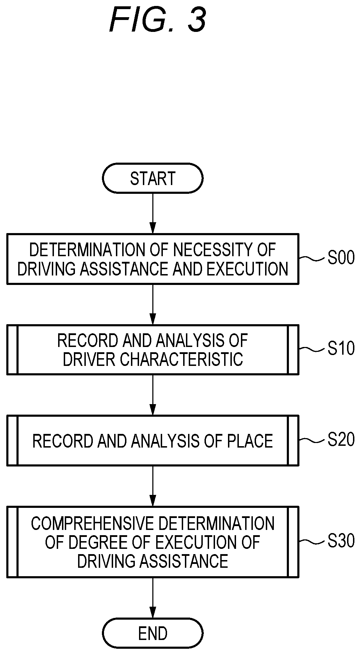

Hereinafter, operation of the vehicle control system according to the present embodiment shown in FIGS. 1 and 2 will be described with reference to flowcharts shown in FIGS. 3 to 7.

In the control unit 13, the travel control unit 130 controls the travel of the vehicle according to the operation of the driver on the vehicle. Specifically, the travel control unit 130 analyzes information based on signals from the sensors obtained from the detection unit 11, and mainly controls the vehicle mechanism unit 15 related to the torque adjustment (driving system) from the engine, the brake operation (braking system), and the steering operation (steering system) in the operations such as starting, stopping, and turning of the vehicle.

Here, the driving assistance determination unit 131 determines necessity of notification to the driver and intervention (forcible control) in the travel control by the ADAS, such as automatic braking contributing to the traveling, according to the condition of the surroundings of the vehicle obtained from the surrounding sensing unit 12, such as an obstacle on a traveling road or a front vehicle. Further, according to the determination result of the driving assistance determination unit 131, the driving assistance execution unit 132 notifies (warns) the driver via the notification unit 14 according to the condition of the surroundings of the vehicle, and further executes the intervention (forcible control) in the travel control contributing to the traveling ("determination of necessity of driving assistance and execution" in step S00).

The driving assistance adjustment unit 134 records, in the driving assistance status recording unit 133, the number-of-times of executions (lifetime number-of-times of executions and/or latest number-of-times of executions) of the driving assistance of the ADAS by the driving assistance execution unit 132 as the driver characteristic. Subsequently, the driving assistance adjustment unit 134 compares the number-of-times of executions of the driving assistance by the ADAS recorded in the driving assistance status recording unit 133 with a "first predetermined reference", a "second predetermined reference", or an "initial reference", and adjusts the degree of driving assistance according to a result (step S10: record and analysis of the driver characteristic).

Here, the "degree of driving assistance" refers to, for example, a degree of adjustment of an execution timing (start distance) of the driving assistance and/or execution intensity of the driving assistance, and the driving assistance adjustment unit 134 performs adjustment to advance (delay) the execution timing (start distance) and/or strengthen (weaken) the execution intensity according to the degree. Further, the "first predetermined reference" is, for example, an UP reference (threshold) of the number-of-times of executions of the driving assistance executed by the driving assistance execution unit 132 and used for switching the degree of execution of the driving assistance, and for example, when the number-of-times of executions of the FCW exceeds the UP reference (first predetermined reference), the degree of execution of the FCW is adjusted to be increased (UP). Further, the "second predetermined reference" is a DOWN reference (threshold) of the number-of-times of executions used when the degree of execution of the driving assistance executed by the driving assistance execution unit 132 is switched, and for example, when the number-of-times of executions of the FCW is less than the DOWN reference (second predetermined reference), the degree of execution of the FCW is adjusted to be reduced (DOWN).

The "initial reference" is, for example, a default reference (threshold) set by default to switch the degree of execution of the driving assistance executed by the driving assistance execution unit 132. Further, the "execution timing" refers to a start distance (time) at which a notification (warning) is issued via the notification unit 14, and the "execution intensity" refers to strength of the warning, such as a volume, light intensity, or vibration when the notification (warning) is issued by a sound, light, or vibration.

In this way, the driving assistance adjustment unit 134 can analyze execution frequency of the driving assistance by recording the total (lifetime) number-of-times of executions and/or the latest number-of-times of executions of the driving assistance executed by the driving assistance execution unit 132, can more accurately notify a driver who receives a large number of notifications, and similarly can more accurately intervene in the travel control for the driver who receives a large number of notifications.

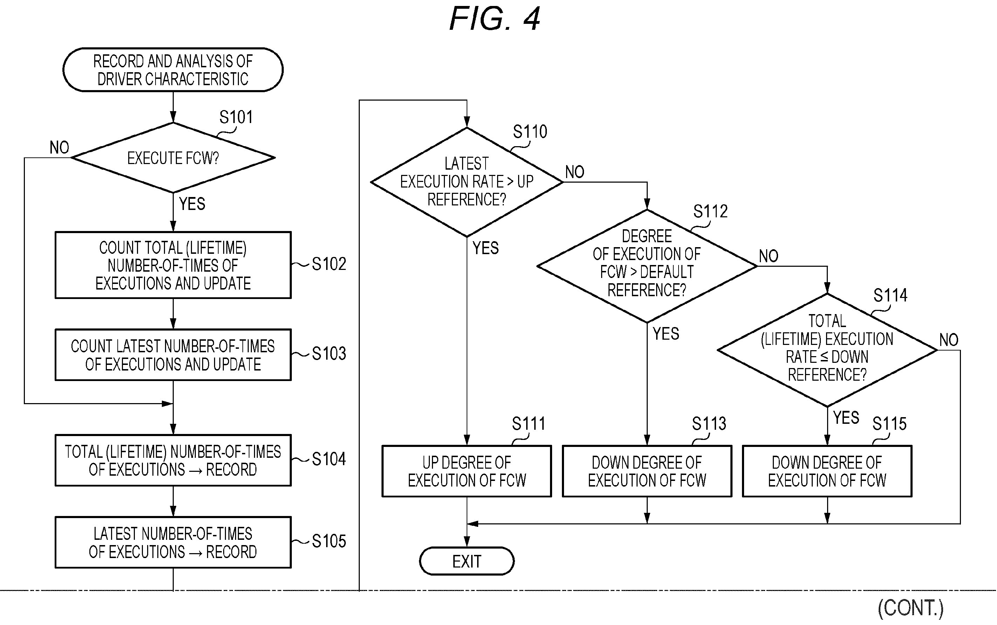

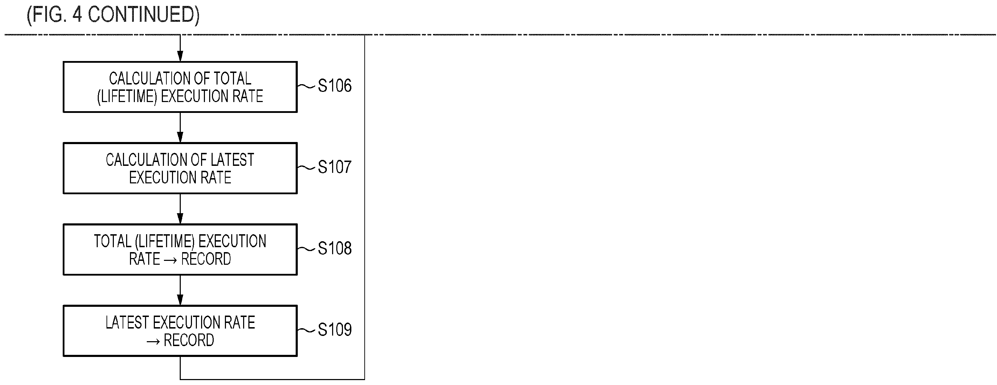

Details of the above-described "record and analysis processing of the driver characteristic (step S10)" will be described later with reference to a flowchart illustrated in FIG. 4.

Next, the driving assistance adjustment unit 134 executes processing of a "record and analysis of a place" (step S20). The driving assistance adjustment unit 134 records the execution status of the driving assistance executed by the driving assistance execution unit 132 in the driving assistance status recording unit 133 in association with a place (position information) when the driving assistance is executed by the driving assistance execution unit 132. Further, the execution status may be further recorded in association with a course of the vehicle, or may be further recorded in association with a surrounding environment of the vehicle acquired by the surrounding sensing unit 12.

Subsequently, the driving assistance adjustment unit 134 compares information related to the place at the time of execution of the driving assistance recorded in the driving assistance status recording unit 133 with the "first predetermined reference", the "second predetermined reference", or the "initial reference", and adjusts the degree of the driving assistance according to a result. By analyzing a characteristic of the driving assistance determination unit 131 (for example, the sensors of the detection unit 11) based on a traveling condition recorded in association with the place, the driving assistance to the driver can be performed in consideration of the characteristic of the driving assistance determination unit 131. Therefore, a safer and more comfortable vehicle can be provided.

The driving assistance adjustment unit 134 may record, in the driving assistance status recording unit 133, as the execution status of the driving assistance executed by the driving assistance execution unit 132, the number-of-times of executions for each place together with the reliability, and may perform control to advance the execution timing and/or strengthen the execution intensity when the reliability of the number-of-times of executions for each place exceeds the first predetermined reference. Here, the "reliability" refers to an execution success or failure rate of the driving assistance (for example, an execution success or failure rate of the FCW) obtained by dividing the number-of-times of avoidance actions after the notification (warning) is issued by the number-of-times of executions of the driving assistance. Therefore, it is possible to more actively assist the driving of the driver in a place having high reliability.

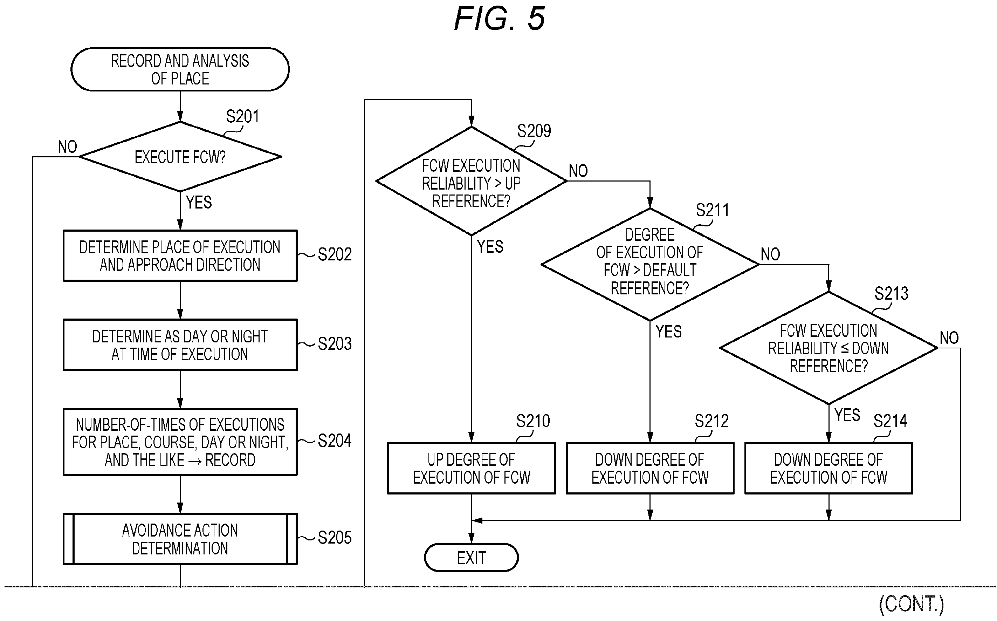

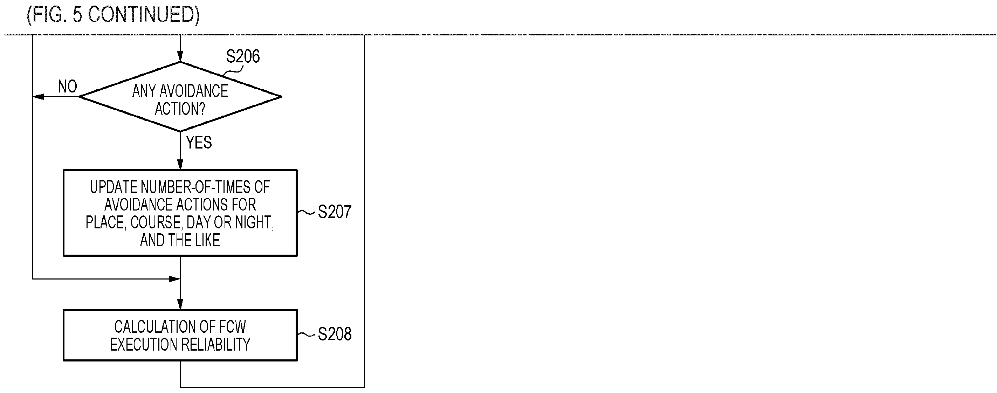

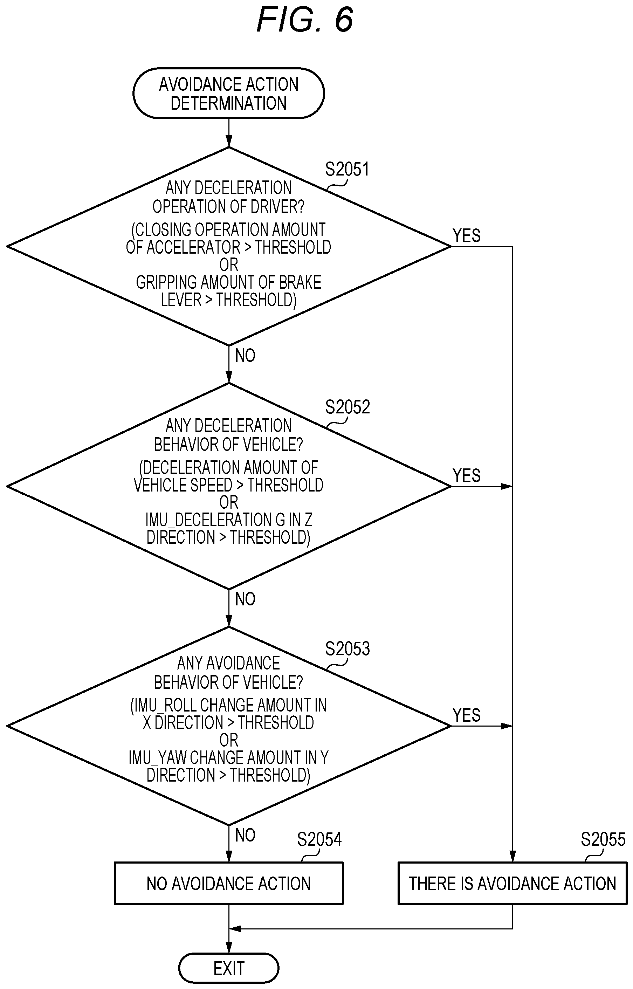

Details of the above-described "record and analysis of a place (step S20)" will be described later with reference to flowcharts illustrated in FIGS. 5 and 6.

Subsequently, the driving assistance adjustment unit 134 executes a "comprehensive determination of a degree of execution of the driving assistance" processing based on an analysis result of the characteristic of the driving assistance determination unit 131 related to the driver characteristic and the place (step S30).

In step S30, a driving assistance execution level is adjusted from two analysis results, that is, the driver characteristic and the characteristic of the driving assistance execution unit (sensors of the detection unit 11). Here, by determining in advance an analysis result that is a main axis of determination and setting a basic value (here, emphasis is placed on the driver characteristic), and setting remaining analysis result as an adjustment value (here, the characteristic of the driving assistance execution unit 132), it is possible to achieve the degree of execution of the driving assistance following the analysis result that is emphasized.

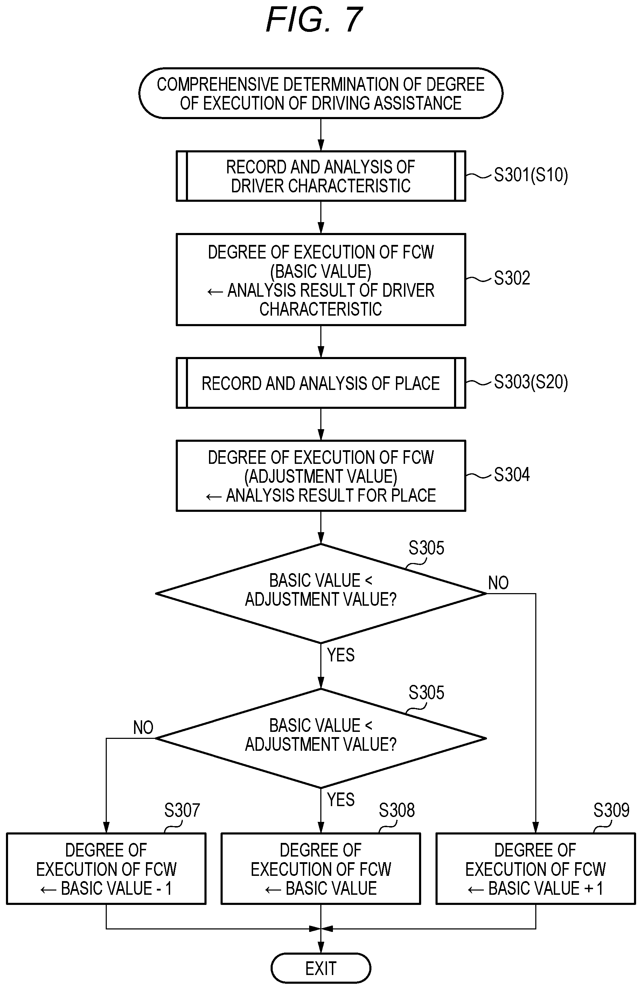

Details of the above-described "comprehensive determination of a degree of execution of driving assistance" (step S30) will be described later with reference to a flowchart shown in FIG. 7.

### (Record and Analysis of Driver Characteristic)

FIG. 4 is a flowchart showing a detailed operation procedure for the "record and analysis of a driver characteristic (step S10)" in FIG. 3. In the following description, it is assumed that the FCW is executed as an example of the driving assistance, and operation of the control unit 13 (driving assistance adjustment unit 134) will be mainly described.

According to FIG. 4, the driving assistance adjustment unit 134 first determines whether the FCW is being executed by the driving assistance execution unit 132 (step S101). Here, when it is determined that the FCW is being executed ("YES" in step S101), the driving assistance adjustment unit 134 updates a value of a counter that counts the total (lifetime) number-of-times of executions every time the driving assistance execution unit 132 executes the driving assistance by the FCW (step S102), and updates a counter that counts the latest number-of-times of executions (step S103).

The counters are either built into the driving assistance adjustment unit 134 or allocated in built-in RAM by a program, and are updated every time the FCW is executed. When the execution of the FCW is stopped ("NO" in step S101), the total (lifetime) number-of-times of executions and the latest number-of-times of executions counted and updated by each counter are recorded in the driving assistance status recording unit 133 (steps S104 and S105).

Next, an execution rate, which is an optimal unit for driving assistance adjustment, is calculated using the total (lifetime) number-of-times of executions of the FCW. This is referred to as a "total (lifetime) execution rate of FCW". A calculation execution condition for the total (lifetime) execution rate of the FCW is a "vehicle travel distance ≥ total (lifetime) execution rate calculation distance", and if this condition is not met, the total (lifetime) execution rate of the FCW is fixed to a default value. The default value is a value at which the degree of execution of the FCW to be described later does not become "LOW".

The total (lifetime) execution rate [%/slot] of the FCW is calculated by dividing the total (lifetime) number-of-times of executions of the FCW by a calculation slot number. Here, the calculation slot number is [number] obtained by dividing the vehicle travel distance by one slot distance (calculation distance unit, for example, 10 km).

Next, an execution rate, which is an optimal unit for the driving assistance adjustment, is calculated using the latest number-of-times of executions of the FCW. This is referred to as a "latest execution rate of FCW". A calculation execution condition for the latest execution rate of the FCW is set to "number of buffers of the number-of-times of executions ≥ number of buffers required for calculation", and if this condition is not met, the latest execution rate of the FCW is fixed to a default value. The default value is a value at which the degree of execution of the FCW to be described later stays at the default.

It is assumed that the above-described buffer is allocated to a RAM built in the driving assistance adjustment unit 134. As a buffering method, the number of buffers required for the calculation is obtained by dividing the latest predetermined travel distance by one slot distance (calculation distance unit, for example, 100 km), and the number-of-times of executions of the FCW for each slot distance is counted and stored in a calculation buffer (number-of-times of executions of the FCW in one latest slot distance). Each time the vehicle completes traveling one slot distance, the driving assistance adjustment unit 134 copies a value of the calculation buffer to a storage buffer array also allocated in the RAM, and then clears the calculation buffer. The number of elements of the storage buffer array is the number of buffers required for the calculation.

The latest execution rate [%/slot] of the FCW is calculated by dividing a total value of the number-of-times of executions of the FCW of the storage buffer array by the number of buffers required for the calculation. Here, the calculation slot number is [number] obtained by dividing the vehicle travel distance by one slot distance (for example, 10 km).

The description returns to the flowchart in FIG. 4. The driving assistance adjustment unit 134 records, in the driving assistance status recording unit 133, the total (lifetime) number-of-times of executions of the FCW and the latest number-of-times of executions as a driving assistance status (steps S104 and S105). Subsequently, the driving assistance adjustment unit 134 calculates a total (lifetime) execution rate by dividing the total (lifetime) number-of-times of executions of the driving assistance executed by the driving assistance execution unit 132 by the calculation distance unit (one slot distance, for example, 100 km) (step S106), and records the total (lifetime) execution rate in the driving assistance status recording unit 133 (step S108). Further, a latest number-of-times of executions is divided by the calculation distance unit (one slot distance, for example, 100 km) to calculate a latest execution rate (step S107), and the latest execution rate is recorded in the driving assistance status recording unit 133 (step S109). Next, the driving assistance adjustment unit 134 determines whether the latest execution rate of the FCW exceeds the UP reference (first predetermined reference) based on the driving assistance status recorded in the driving assistance status recording unit 133 (step S110).

Here, when the latest execution rate of the FCW exceeds the UP reference (first predetermined reference) ("YES" in step S110), the driving assistance adjustment unit 134 performs adjustment to increase (UP) the degree of execution of the FCW (step S111). Specifically, adjustments are made to advance the execution timing of the FCW executed by the driving assistance execution unit 132 or to strengthen the execution intensity. The adjustments may be made to advance the execution timing of the FCW and to strengthen the execution intensity.

By adjusting the degree of execution of the FCW executed by the driving assistance execution unit 132 in this manner, the driving assistance adjustment unit 134 can increase the degree of driving assistance for a driver who frequently receives notifications and/or interventions in the driving assistance, thereby more actively assisting the driving of the driver.

On the other hand, when the latest execution rate of the FCW does not exceed the UP reference (first predetermined reference) ("NO" in step S110), the driving assistance adjustment unit 134 determines whether the degree of execution of the FCW exceeds the default reference (initial reference) (step S112).

Here, when the degree of execution of the FCW exceeds the default reference (initial reference) ("YES" in step S112), the driving assistance adjustment unit 134 performs an adjustment to weaken (DOWN) the degree of execution of the FCW (step S113). Specifically, the driving assistance adjustment unit 134 performs an adjustment to delay the execution timing of the FCW executed by the driving assistance execution unit 132 or weaken the execution intensity. Adjustments may be made to delay the execution timing of the FCW and to weaken the execution intensity.

By adjusting the degree of execution of the FCW performed by the driving assistance execution unit 132 in this manner, the driving assistance adjustment unit 134 can weaken the degree of driving assistance for drivers who are less likely to receive notifications and/or interventions in the driving assistance, thereby respecting own driving of the driver.

On the other hand, when the degree of execution of the FCW does not exceed the default reference ("NO" in step S112), the driving assistance adjustment unit 134 determines whether the lifetime number-of-times of executions of the FCW is equal to or less than the DOWN reference (second predetermined reference) (step S114).

Here, when the total (lifetime) number-of-times of executions of the FCW is equal to or less than the DOWN reference ("YES" in step S114), the driving assistance adjustment unit 134 performs the adjustment to weaken (DOWN) the degree of execution of the FCW (step S115). Specifically, the execution timing of the FCW executed by the driving assistance execution unit 132 is delayed, or the adjustment for weakening the execution intensity is performed. The adjustments may be made to advance the execution timing of the FCW and to weaken the execution intensity.

By adjusting the degree of execution of the FCW performed by the driving assistance execution unit 132 in this manner, the driving assistance adjustment unit 134 can weaken the degree of driving assistance for drivers who are less likely to receive notifications and/or interventions in the driving assistance, thereby respecting own driving of the driver.

The following table (<Table 1>) shows a setting example of the degree of execution of the FCW adjusted according to the flowchart in FIG. 4.

**[Table 1]**

| <Table 1> Example of setting degree of execution of FCW | | | | | |
|---|---|---|---|---|---|
| Degree of execution of FCW | | Low | Default | Middle | High |
| Switching Condition | | ≤ DOWN reference | ··· | > UP reference 1 | > UP reference 2 |
| Notification | Execution timing | Standard | Standard | Earlier than Default | Earlier than Middle |
| | Execution intensity (sound, light, or vibration) | Weaker than Default | Standard | Stronger than Default | Stronger than Middle |

Here, it is shown that the degree of execution of the FCW is set to four degrees, that is, "LOW", "Default", "Middle", and "High", when the degree of execution of the FCW is switched to "LOW", a condition is that the degree of execution of the FCW does not exceed the DOWN reference (second predetermined reference), when the degree of execution of the FCW is switched to "Middle", the condition is that the degree of execution of the FCW exceeds the UP reference 1 (first predetermined reference), and when the degree of execution of the FCW is switched to "High", the condition is that the degree of execution of the FCW exceeds the UP reference 2 (second predetermined reference).

When the degree of execution of the FCW is switched to "Default", the condition is that the degree of execution of the FCW is equal to or less than the DOWN reference (second predetermined reference) and exceeds the UP reference (first predetermined reference).

Further, when the degree of execution of the FCW is "Low", the execution timing (start distance) of the notification is standard, and the execution intensity is set to be weaker than "Default". Further, when the degree of execution of the FCW is "Default", both the execution timing and the execution intensity of the notification are set as standard. When the degree of execution of the FCW is "Middle", the execution timing of the notification is set to be earlier than "Default", and the execution intensity is set to be stronger than "Default". When the degree of execution of the FCW is "High", the execution timing of the notification is set to be earlier than that in the case of "Middle", and the execution intensity is set to be stronger than that in the case of "Middle".

In the analysis of the driver characteristic, the degree of execution of the FCW described above shifts when both the total (lifetime) number-of-times of executions (or execution rate) of the FCW and the latest number-of-times of executions (or execution rate) of the FCW are low, and the degree of execution of the FCW increases when these number-of-times of executions (rates) exceed a threshold, and decreases when these number-of-times of executions (rates) fall below the threshold. Further, for the degree of execution of the FCW, the degree is not limited, and the notification (warning) is freely set for each degree.

### (Record and Analysis of Place)

FIG. 5 is a flowchart showing a detailed processing procedure for the "record and analysis of a place" in FIG. 3. Hereinafter, operation of the control unit 13 (driving assistance adjustment unit 134) shown in FIG. 1 will be mainly described with reference to the flowchart in FIG. 5.

According to FIG. 5, the control unit 13 (driving assistance adjustment unit 134) first determines whether the driving assistance execution unit 132 is executing the FCW (step S201). Here, when the FCW is executed ("YES" in step S201), the driving assistance execution unit 132 determines a place where the FCW is executed and an approach direction (course) of the vehicle as an FCW execution status each time the driving assistance is executed (step S202). The place and the approach direction (course) of the vehicle are determined based on the position information measured by the GPS/map 16 and a map (map coordinate).

Subsequently, the driving assistance adjustment unit 134 determines whether the FCW is executed during a day or a night as the FCW execution status (step S203). Here, since an image quality (camera image) of information acquired by the surrounding sensing unit 12 varies depending on the day/night without depending on only the place, the notification (warning) is likely to be output or is difficult to be output, and thus, by acquiring environment information such as day/night and a weather at the time of the execution of the FCW for each place, the notification and/or the intervention in the driving assistance can be appropriately analyzed according to the specification, which is advantageous.

Here, when the environment information around the vehicle is acquired by the surrounding sensing unit 12 including the camera, for example, a dynamic range adjustment function (of recognizing brightness and adjusting a shutter time or a gain value) of the camera is used, a threshold for determining whether an adjustment value is day or night is set, and day or night can be determined based on whether the adjustment value is large or small. In order to calibrate the determination result, clock information in GPS reception information acquired from the GPS/map 16 may be referred to.

Subsequently, the driving assistance adjustment unit 134 associates the FCW execution status with the execution place, and further associates the FCW execution status with the course of the vehicle indicating a way of entering the place and the surrounding environment (weather conditions such as a day/night, sunny/rainy) of the vehicle, and records each of the number-of-times of executions (each execution rate) in the driving assistance status recording unit 133 (step S204).

Subsequently, the driving assistance adjustment unit 134 determines whether the avoidance action is taken by the operation of the driver after the FCW is executed (step S205). Here, the avoidance action of the FCW indicates, for example, an operant behavior of the driver for avoiding a collision with the front obstacle, and is typically considered to be deceleration by braking or closing an accelerator to stop the vehicle before a collision occurs, a steering wheel operation for avoiding an intersection between the obstacle and the course of the host vehicle, a course change due to fall-down of the vehicle in the case of the two-wheeled vehicle, sudden acceleration for avoiding the intersection between the obstacle and the course of the host vehicle, or the like.

Therefore, the inertial sensor (IMU sensor) of the detection unit 11 is used for detecting a behavior of the vehicle caused by the vehicle operation performed by the driver when taking the avoidance action. As described above, the inertial sensor can measure the driving condition and the posture of the vehicle (detect the translational motion in three axial directions from the acceleration [m/s2] and the rotational motion from the angular velocity [deg/s]) using the triaxial acceleration sensor and the triaxial angular velocity sensor (gyrosensor).

FIG. 6 shows a detailed procedure for "avoidance action determination" processing executed in step S205. According to FIG. 6, the driving assistance adjustment unit 134 first determines whether the driver performs a deceleration operation (step S2051). The deceleration operation can be determined by comparing a closing operation amount of an accelerator with a preset threshold, or by comparing a gripping amount of a brake lever with a preset threshold.

Here, when it is determined that the closing operation amount of the accelerator is equal to or greater than a predetermination value (threshold) or an operation amount of the brake lever exceeds a threshold ("YES" in step S2051), the driving assistance adjustment unit 134 recognizes that "there is the avoidance action" performed by the driver (step S2055).

On the other hand, when it is determined that the closing operation amount of the accelerator does not exceed the threshold or the gripping amount of the brake lever does not exceed the threshold ("NO" in step S2051), the driving assistance adjustment unit 134 further determines whether there is a deceleration behavior of the vehicle (step S2052). The deceleration behavior of the vehicle can be determined by checking whether a deceleration amount of the vehicle exceeds a threshold or whether deceleration acceleration (IMU_G) in a Z direction of the inertial sensor of the detection unit 11 exceeds a threshold. The deceleration acceleration may be a change amount of a pitch.

Here, when the deceleration amount of the vehicle exceeds the threshold or the IMU_G exceeds the threshold ("YES" in step S2052), the driving assistance adjustment unit 134 determines that "there is the avoidance action" (step S2055). On the other hand, when the deceleration amount of the vehicle does not exceed the threshold or the IMU_G does not exceed the threshold ("NO" in step S2052), the driving assistance adjustment unit 134 further determines whether a roll change amount (IMU_roll change amount) in an X direction of the inertial sensor of the detection unit 11 exceeds a threshold or whether a yaw change amount (IMU_yaw change amount) in a Y direction of the inertial sensor exceeds a threshold (step S2053).

Here, when the roll change amount (IMU_roll change amount) in the X direction of the inertial sensor exceeds the threshold or the yaw change amount (IMU_yaw change amount) in the Y direction of the inertial sensor exceeds the threshold ("YES" in step S2053), the driving assistance adjustment unit 134 determines that "there is the avoidance action" (step S2055). On the other hand, when the roll change amount (IMU_ROLL change amount) in the X direction of the inertial sensor does not exceed the threshold or the yaw change amount (IMU_yaw change amount) in the Y direction does not exceed the threshold ("NO" in step S2053), the driving assistance adjustment unit 134 determines that "there is no avoidance action" performed by the driver (step S2054).

When the behavior of the vehicle caused by the avoidance action (brake operation or accelerator operation) performed by the driver is determined, the driving assistance adjustment unit 134 is required to collect the behavior of the vehicle such as IMU_acceleration G in the Z direction, the IMU_roll change amount in the X direction, and the IMU_yaw change amount in the Y direction as IMU output parameters in advance and set optimum thresholds by a test, a simulation, or the like.

The description returns to the flowchart in FIG. 5. In FIG. 5, when it is determined that "there is the avoidance action" ("YES" in step S206) after the determination of the presence or absence of the avoidance action (step S205), the driving assistance adjustment unit 134 updates (+ 1) the number-of-times of the avoidance action for each of the places, the courses, and the day or night counted and recorded in step S204 (step S207).

Incidentally, the driving assistance reliability estimation unit 135 calculates the reliability (FCW execution reliability) each time the driving assistance execution unit 132 executes the FCW or at predetermined intervals (step S208). Here, the reliability is an FCW execution success or failure rate calculated by dividing the number-of-times of avoidance actions caused by the operation of the driver by the number-of-times of executions of the FCW after the driving assistance execution unit 132 issues the notification (warning) via the notification unit 14. The FCW execution success or failure rate is calculated for each of the places, the courses, and the day/night.

When it is determined in the process of determining the "presence or absence of the avoidance action" in step S206 that "there is no avoidance action" ("NO" in step S206), the driving assistance adjustment unit 134 causes the driving assistance reliability estimation unit 135 to calculate the reliability (FCW execution reliability) without updating the number-of-times of avoidance actions (step S208).

Subsequently, the driving assistance adjustment unit 134 determines whether the reliability (FCW execution reliability) calculated by the driving assistance reliability estimation unit 135 exceeds the UP reference (first predetermined reference) (step S209). Here, when it is determined that the reliability (FCW execution reliability) exceeds the UP reference (first predetermined reference), the driving assistance adjustment unit 134 performs the adjustment to increase (UP) the degree of execution of the FCW (step S210). Specifically, the adjustments are made to advance the execution timing of the FCW executed by the driving assistance execution unit 132 or to strengthen the execution intensity. The adjustments may be made to advance the execution timing of the FCW and to strengthen the execution intensity.

Therefore, it is possible to more actively assist the driving of the driver in an environment such as a place where the reliability (FCW execution reliability) is high, a course, day, or sunny.

On the other hand, when it is determined that the reliability (FCW execution reliability) calculated by the driving assistance reliability estimation unit 135 does not exceed the UP reference (first predetermined reference) ("NO" in step S209), the driving assistance adjustment unit 134 further determines whether the degree of execution of the FCW exceeds the default reference (initial reference) (step S211).

Here, when it is determined that the degree of execution of the FCW exceeds the default reference (initial reference) ("YES" in step S211), the driving assistance adjustment unit 134 performs the adjustment to weaken (DOWN) the degree of execution of the FCW (step S212). Specifically, the driving assistance adjustment unit 134 performs the adjustments to delay the execution timing of the FCW executed by the driving assistance execution unit 132 or weaken the execution intensity. The adjustments may be made to delay the execution timing of the FCW and to weaken the execution intensity.

Therefore, the driving assistance is weakened for drivers who receive less notification and/or intervention, thereby making it possible to respect the own driving of the driver.

On the other hand, when it is determined that the degree of execution of the FCW does not exceed the default reference ("NO" in step S211), the driving assistance adjustment unit 134 further determines whether the reliability (execution reliability of the FCW) is equal to or lower than the DOWN reference (second predetermined reference) (step S213).

Here, when it is determined that the reliability (FCW execution reliability) is equal to or less than the DOWN reference (second predetermined reference) ("YES" in step S213), the driving assistance adjustment unit 134 performs the adjustment to weaken (DOWN) the degree of execution of the FCW (step S214). Specifically, the driving assistance adjustment unit 134 performs the adjustments to delay the execution timing of the FCW executed by the driving assistance execution unit 132 or weaken the execution intensity. The adjustments may be made to advance the execution timing of the FCW and to weaken the execution intensity.

Therefore, the driving assistance is reduced for the drivers who receive less notification and/or intervention, thereby making it possible to respect the own driving of the driver.

### (Comprehensive Determination of Degree of Execution of Driving Assistance)

In the vehicle control system according to the present embodiment, when the degree of execution of the driving assistance is finally determined, the degree of execution of the driving assistance is determined from two analysis results, that is, the driver characteristic and the characteristic of the driving assistance determination unit 131. Further, by determining in advance an analysis result that is a main axis of the determination and setting a "basic value" (here, emphasis is placed on the driver characteristic), and setting a remaining analysis result as an "adjustment value" (here, the characteristic of the driving assistance execution unit), it is possible to achieve the degree of execution of the driving assistance following the analysis result that is emphasized.

The following <Table 2> shows an "example of adjusting the degree of execution of the FCW".

### [Table 2]

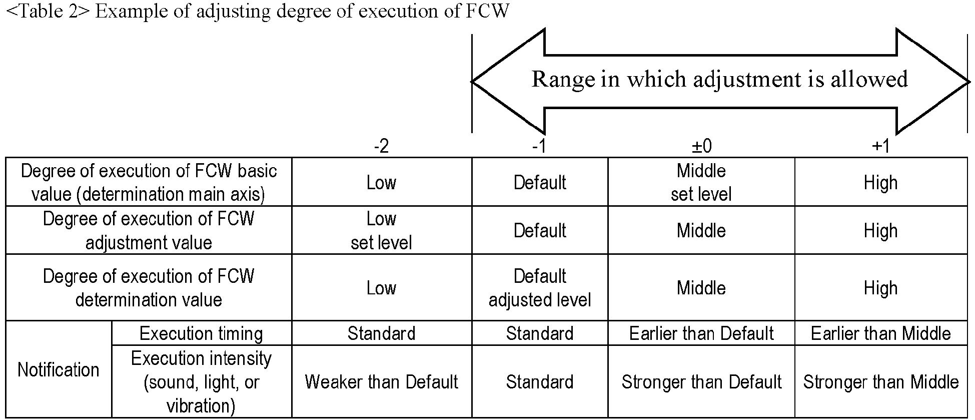

According to <Table 2>, regarding the degree of execution of the FCW, in a case in which the degree of execution of the FCW is finally determined (as the "determination value") with the "basic value" as the driver characteristic and the "adjustment value" as the characteristic of the driving assistance determination unit 131, when the analysis result ("basic value") of the execution status based on the driver characteristic indicates that the execution timing of the driving assistance is advanced and/or the execution intensity of the driving assistance execution unit 132 is strengthened ("Middle" set level), while the analysis result ("adjustment value") of the execution status based on the characteristic of the driving assistance determination unit 131 indicates that the execution timing is delayed and/or the execution intensity is weaken ("LOW" set level), the table finally indicates that both the execution timing and the execution intensity are maintained (the "determination value" is "Default" adjusted level).

In this way, when the driving assistance adjustment unit 134 adjusts the degree of execution of the driving assistance executed by the driving assistance execution unit 132 from the two analysis results, that is, the driver characteristic and the characteristic of the driving assistance determination unit 131 (for example, the sensors of the detection unit 11), by determining in advance the analysis result that is the main axis of the determination and setting the "basic value" (here, the emphasis is placed on the driver characteristic), and setting the remaining analysis result as the "adjustment value" (here, the characteristic of the driving assistance determination unit 131), it is possible to achieve the degree of execution of the driving assistance following the analysis result that is emphasized.

In a case in which the degree of execution of the FCW is finally determined (as the "determination value") with the "basic value" as the driver characteristic and the "adjustment value" as the characteristic of the driving assistance determination unit 131, the adjustment by the characteristic of the driving assistance determination unit 131 is limited to a range (first range) of ±1 of the basic value (main axis), as shown in <Table 2> as a "range in which the adjustment is permitted", and thus it is possible to achieve the following to the analysis result of the driver characteristic that is respected.

FIG. 7 is a flowchart showing a detailed processing procedure for the "comprehensive determination of a degree of execution of the driving assistance" processing in FIG. 3, and the procedure follows the "example of adjusting the degree of execution of the FCW" shown in <Table 1> described above. Hereinafter, the operation of the control unit 13 (driving assistance adjustment unit 134) shown in FIG. 1 will be described with reference to the flowchart in FIG. 7.

In FIG. 7, the driving assistance adjustment unit 134 first executes the processing of the record and analysis of the driver characteristic (step S301). The processing here is as shown in step S10 in the flowchart in FIG. 3 and steps S101 to S115 in the flowchart in FIG. 4. In summary, in step S301, the driving assistance adjustment unit 134 records, in the driving assistance status recording unit 133, the number-of-times of executions (lifetime number-of-times of executions and/or the latest number-of-times of executions) of the driving assistance executed by the driving assistance execution unit 132 as the driver characteristic, compares the recorded number-of-times of executions of the driving assistance with the UP reference (first predetermined reference), the DOWN reference (second predetermined reference), or the default reference (initial reference), and analyzes the degree of the driving assistance according to the result.

Subsequently, the driving assistance adjustment unit 134 sets the analysis result (degree of execution of the FCW) of the driver characteristic as the "basic value" from the viewpoint of placing importance on the driver characteristic (step S302).

Next, the driving assistance adjustment unit 134 executes the processing of the "record and analysis of the place" (step S303). The processing here is as shown in step S20 in the flowchart in FIG. 3 and steps S201 to S214 in the flowchart in FIG. 5. In summary, in step S303, the driving assistance adjustment unit 134 records the number-of-times of executions of the driving assistance executed by the driving assistance execution unit 132 in association with the place (position information) or the like at the time of execution, compares the number-of-times of executions of the driving assistance with the UP reference (first predetermined reference), the DOWN reference (second predetermined reference), or the default reference (initial reference) based on information related to a recorded place or the like (which may include a course and a surrounding environment), and analyzes the degree of the driving assistance according to the result.

Next, the driving assistance adjustment unit 134 sets an analysis result for the place as an "adjustment value" for adjusting the previously set "basic value" (step S304).

Subsequently, when the "basic value" does not exceed the "adjustment value" ("YES" in step S305), the driving assistance adjustment unit 134 further determines whether the "basic value" exceeds the "adjustment value" (step S306). Here, when the "basic value" exceeds the "adjustment value" ("YES" in step S306), the driving assistance adjustment unit 134 sets the previous "basic value" as the adjusted degree of execution of the FCW (step S308), and when the "basic value" does not exceed the "adjustment value" ("NO" in step S306), the driving assistance adjustment unit 134 reduces the previous degree of execution of the FCW by one level ("basic value - 1") and sets the degree as the adjusted new degree of execution of the FCW (step S307).

When the "basic value" exceeds the "adjustment value" in step S305 ("NO" in step S305), the driving assistance adjustment unit 134 increases the previous degree of execution of the FCW by one level ( "basic value + 1") and sets the degree as the adjusted new degree of execution of the FCW (step S309).

As described above, as shown in the "example of adjusting the degree of execution of the FCW" in <Table 2> described above, when the degree of execution of the FCW is finally determined (as the "determination value"), the adjustment by the characteristic of the driving assistance determination unit 131 is limited to the range (first range) of the "basic value (main axis) ± 1" as shown as the "range in which the adjustment is allowed" even when a difference (level difference) between ranges of the "basic value" and the "adjustment value" is two levels. Accordingly, it is possible to achieve the following to the analysis result of the driver characteristic that is respected. Here, the adjustment of the degree of execution of the FCW is limited to the range of "basic value ± 1" in order to respect the analysis result set to the "basic value" and utilize the analysis result in the travel control.

Functions of the control unit 13 described above can be implemented by a program for causing a computer to function and causing the computer to function as functional blocks 130 to 135. In this case, the control unit 13 includes a computer including at least one control device (for example, a processor) and at least one storage device (for example, a RAM) as hardware for executing the above-described program. By executing the above-described program by the control device and the storage device, control of each of the functional blocks described in the present embodiment can be achieved.

The above-described program may be recorded on one or more computer-readable recording media instead of being temporary. The recording medium may or may not be provided in the control unit 13. In the latter case, the above-described program may be supplied to the above-described control unit 13 via any wired or wireless transmission medium.

At least a part of the function of each control block described above can also be achieved by a logic circuit. For example, an integrated circuit in which a logic circuit functioning as each functional block described above is formed is also included in the scope of the present invention. In addition, the function of each functional block can also be achieved by, for example, a quantum computer. Further, each processing described in the present embodiment may be executed by artificial intelligence (AI). In this case, the AI may operate on the control unit 13 of the present embodiment, or may operate on another device (for example, a cloud server or the like).

### (Effects of Embodiment)

As described above, according to the vehicle control system of the present embodiment, for example, as illustrated in the flowchart of FIG. 3, the control unit 13 (driving assistance adjustment unit 134) records and analyzes the execution status of the driving assistance executed by the driving assistance execution unit 132 (step S10), and adjusts the degree of the driving assistance based on the analysis result of the execution status (step S30).

Therefore, it is possible to more accurately notify the driver who receives a large number of notifications. In other words, it is possible to contribute to safe driving by performing the adjustment to strengthen (advance) the warning for a driver who receives more warnings and has a strong tendency to perform dangerous driving and prompting driving such that the warning is not issued, and on the other hand, it is possible to respect the own driving of the driver by performing the adjustment to weaken the warning for a driver who has a strong tendency to perform safe driving, and it is possible to eliminate discomfort caused by unnecessary warnings. Similarly, it is possible to more accurately intervene in the travel control for the driver who receives a large number of notifications.

According to the vehicle control system of the present embodiment, for example, as shown in the flowchart of FIG. 4, the driving assistance adjustment unit 134 records the lifetime execution rate calculated based on the total (lifetime) number-of-times of executions of the driving assistance executed by the driving assistance execution unit 132 and/or the latest execution rate calculated based on the latest number-of-times of executions (steps S101 to S105), and adjusts the degree of driving assistance by analyzing the recorded lifetime execution rate and/or latest execution rate (steps S106 to S111). By adjusting the degree of driving assistance based on the execution rate calculated in this way, it is possible to more accurately notify the driver who receives the large number of notifications, and similarly, it is possible to more accurately intervene in the travel control for the driver who receives the large number of notifications. The same effect can be obtained by recording and analyzing the number-of-times of executions as the execution status of the driving assistance of the driving assistance execution unit 132 instead of the execution rate.

Further, according to the vehicle control system of the present embodiment, for example, as shown in the flowchart of FIG. 4, when the execution rate of the driving assistance executed by the driving assistance execution unit 132 exceeds the first predetermined reference (UP reference) ("YES" in step S110), the adjustments are made to advance the execution timing and/or to strengthen the execution intensity (step S111). Therefore, by advancing the execution timing (start distance (time)) of the driving assistance execution unit and/or strengthening the execution intensity (intensity of the warning) for the driver who receives a large number-of-times of executions of the driving assistance, it is possible to more actively assist the driving of the driver who frequently receives the notifications and/or the interventions in the travel control, and to contribute to the safe driving.

According to the vehicle control system of the present embodiment, for example, as shown in the flowchart of FIG. 4, when the execution rate of the driving assistance executed by the driving assistance execution unit 132 does not exceed the first predetermined reference (UP reference) ("NO" in step S110), the driving assistance adjustment unit 134 determines whether the execution timing and/or the execution intensity exceeds the initial reference (step S112), and when exceeds the initial reference ("YES" in step S112), the driving assistance adjustment unit 134 performs control to delay the execution timing and/or weaken the execution intensity (step S113). Therefore, the own driving of the driver can be respected for the driver who receive less notification and/or intervention in the travel control, and the discomfort caused by the unnecessary warnings can be eliminated.

According to the vehicle control system of the present embodiment, for example, as shown in the flowchart of FIG. 4, the driving assistance adjustment unit 134 records the total (lifetime) execution rate and the latest execution rate as the execution status of the driving assistance executed by the driving assistance execution unit 132 (steps S101 to S109), performs, when the first predetermined reference (UP reference) and the second predetermined reference (DOWN reference) are used and the latest execution rate of the FCW exceeds the first predetermined reference (UP reference) ("YES" in step S110), the adjustment to increase the degree of execution of the FCW (step S111), and performs, when the total (lifetime) execution rate is less than the second reference ("YES" in step S114), the adjustment to reduce the degree of execution of the FCW (step S115). Therefore, it is possible to more actively assist the driving of the driver who frequently receives the notifications and/or the interventions in the travel control, and it is possible to respect the own driving of the driver by weakening the driving assistance for the driver who receive less notification and/or intervention in the travel control.

Further, according to the vehicle control system of the present embodiment, for example, as shown in the flowchart of FIG. 4, the driving assistance adjustment unit 134 records the total (lifetime) execution rate and the latest execution rate as the execution status of the driving assistance executed by the driving assistance execution unit 132 (steps S101 to S109), performs, when the first predetermined reference (UP reference), the initial reference (default reference), and the second predetermined reference (DOWN reference) are used and the latest execution rate of the FCW exceeds the first predetermined reference (UP reference) ("YES" in step S110), the control to increase the degree of execution of the FCW (step S111), reduces, when the latest execution rate of the FCW does not exceed the first predetermined reference (UP reference) ("NO" in step S110) and exceeds the initial reference (default reference) ("YES" in step S112), the degree of execution of the FCW (step S113), and performs, when the total (lifetime) execution rate falls below the second predetermined reference (DOWN reference) ("YES" in step S114), the control to reduce the degree of execution of the FCW (step S115). Therefore, it is possible to more actively assist the driving of the driver who frequently receives the notifications and/or the interventions in the travel control, and it is possible to respect the own driving of the driver by weakening the driving assistance for the driver who receive less notification and/or intervention in the travel control.

According to the vehicle control system of the present embodiment, the driving assistance adjustment unit 134 does not determine whether the execution rate exceeds the first predetermined reference until the travel distance or a travel time of the vehicle or the execution rate of the driving assistance executed by the driving assistance execution unit 132 exceeds the threshold (for example, "vehicle travel distance ≥ lifetime execution rate calculation distance"). As described above, when the driving assistance adjustment unit 134 determines whether the driving assistance execution unit 132 issues the notifications and/or intervenes in the travel control many times, the number-of-times of executions and the execution rate of the driving assistance are recorded to be large, so that the accuracy of the adjustment can be further enhanced. Therefore, it is possible to more actively assist the driving of the driver who frequently receives the notifications and/or the interventions in the travel control, and it is possible to respect the own driving of the driver by weakening the driving assistance for the driver who receive less notification and/or intervention in the travel control.

According to the vehicle control system of the present embodiment, for example, as shown in the flowchart of FIG. 5, the driving assistance adjustment unit 134 records the execution status of the driving assistance executed by the driving assistance execution unit 132 in association with the place at the time of execution (steps S201 to S204), and analyzes the execution status for each place (steps S209 to S214). In this way, by specifying the place at the time of analysis, it is possible to appropriately analyze the notification and/or the intervention in the travel control. In addition to the place, environment information including the way of entering the place (course) and the day/night is also recorded in association with the execution status of the driving assistance, and the notification and/or the intervention in the travel control can be appropriately analyzed by specifying the environment information.

According to the vehicle control system of the present embodiment, for example, as shown in the flowchart of FIG. 5, the driving assistance adjustment unit 134 records, as the execution status of the driving assistance executed by the driving assistance execution unit, the number-of-times of executions for each place together with the execution reliability (execution success or failure rate of the driving assistance obtained by dividing the number-of-times of avoidance actions after the notification by the number-of-times of executions of the driving assistance) calculated by the driving assistance reliability estimation unit 135 (step S208), and performs, when the execution reliability for each place exceeds the first predetermined reference ("YES" in step S209), the adjustments to advance the execution timing and/or increase the execution intensity (step S210). Therefore, it is possible to more actively assist the driving of the driver in a place having high execution reliability.

According to the vehicle control system of the present embodiment, for example, as shown in the flowcharts of FIGS. 5 and 6, the driving assistance adjustment unit 134 records, as the execution status of the driving assistance executed by the driving assistance execution unit 132, the number-of-times of executions for each place together with the reliability (steps S205 to S208 in FIG. 5) based on the presence or absence of the operation of the driver and/or the presence or absence of the behavior of the vehicle (steps S2051 to S2053 in FIG. 6), and performs, when the execution reliability of the number-of-times of executions for each place exceeds the first predetermined reference (UP reference) ("YES" in step S209 of FIG. 5), the adjustment to advance the execution timing and/or strengthen the execution intensity (step S210 in FIG. 5). Therefore, it is possible to more actively assist the driving of the driver in the place having high reliability.

According to the vehicle control system of the present embodiment, for example, as shown in the flowchart of FIG. 5, when the execution reliability of the number-of-times of executions of the driving assistance executed by the driving assistance execution unit 132 does not exceed the first predetermined reference (UP reference) ("NO" in step S209), the driving assistance adjustment unit 134 further determines whether the execution timing and/or the execution intensity exceeds the initial reference (default reference) (step S211). Further, when the execution timing and/or the execution intensity does not exceed the initial reference (DOWN reference) ("NO" in step S211), the adjustments are made to delay the execution timing and/or weaken the execution intensity (step S212).

In other words, the driving assistance is provided less to the driver who are less likely to receive the notifications and/or the interventions in the travel assistance (perform less avoidance action after the warning is issued). Accordingly, it is possible to reduce the discomfort given to the driver and respect the own driving of the driver. The presence or absence of the avoidance action can be determined by detecting, by using the sensors mounted on the vehicle, a brake operation, an accelerator operation, a steering wheel operation, or the like performed by the driver after the warning is issued.

According to the vehicle control system of the present embodiment, for example, as shown in the flowchart of FIG. 5, when the reliability of the number-of-times of executions of the driving assistance calculated by the driving assistance reliability estimation unit 135 does not exceed the initial reference (default reference) ("NO" in step S211) and the reliability of the number-of-times of executions for each place is the second predetermined reference (DOWN reference) ("YES" in step S213), the driving assistance adjustment unit 134 performs the adjustment to delay the execution timing and/or weaken the execution intensity (step S214). In other words, the driving assistance is provided less to the driver who are less likely to receive the notifications and/or the interventions in the travel assistance (perform less avoidance action after the warning is issued). Accordingly, it is possible to reduce the discomfort given to the driver and respect the own driving of the driver.

According to the vehicle control system of the present embodiment, for example, as shown in the flowchart of FIG. 7, by analyzing the driver characteristic using all the execution statuses recorded in the driving assistance status recording unit 133 (step S301) and analyzing the characteristic of the driving assistance determination unit 131 based on the traveling condition recorded in association with the place (step S303), it is possible to perform the adjustments (steps S305 to S309) in which the characteristic of the driving assistance determination unit 131 are considered in the driver characteristic. Therefore, it is possible to provide safer and more comfortable driving assistance.

According to the vehicle control system of the present embodiment, for example, as shown in the "example of adjusting the degree of execution of the FCW" of <Table 2>, in a case in which the degree of execution of the FCW is finally determined (as the "determination value") with the "basic value" as a characteristic of an individual and the "adjustment value" as the characteristic of the driving assistance determination unit 131 with respect to the degree of execution of the FCW, when the analysis result ("basic value") of the execution status based on the driver characteristic indicates that the execution timing of the driving assistance is advanced and/or the execution intensity of the driving assistance execution unit 132 is strengthened ("Middle" set level), while the analysis result ("adjustment value") of the execution status based on the characteristic of the driving assistance determination unit 131 indicates that the execution timing is delayed and/or the execution intensity is weakened ( "Low" set level), the "determination value" is finally "Default" adjusted level and both the execution timing and the execution intensity are maintained.

As described above, when the degree of execution of the driving assistance is adjusted from the two analysis results, that is, the driver characteristic and the characteristic of the driving assistance determination unit 131, by determining in advance the analysis result that is the main axis of the determination and setting the "basic value" (here, the emphasis is placed on the driver characteristic), and setting the remaining analysis result as the "adjustment value" (here, the characteristic of the driving assistance determination unit 131), it is possible to achieve the degree of execution of the driving assistance following the analysis result that is emphasized.

According to the vehicle control system of the present embodiment, for example, as shown in the "example of adjusting the degree of execution of the FCW" of <Table 2>, when the degree of execution of the FCW is finally determined (as the "determination value") with the "basic value" as the driver characteristic and the "adjustment value" as the characteristic of the driving assistance determination unit 131 with respect to the degree of execution of the FCW, the adjustment by the characteristic of the driving assistance determination unit 131 is limited to the range (first range) of "basic value ± 1" as shown as the "range in which the adjustment is allowed" in <Table 2> even when the difference (level difference) between the ranges of the "basic value" and the "adjustment value" is two levels, and thus it is possible to achieve the following to the analysis result of the driver characteristic that is respected.

As described above, according to the vehicle control system of the present embodiment, it is possible to strengthen (advance) the warning for the driver who performs dangerous driving, and to prompt the driver to perform the driving such that the warning is not issued. In other words, the warning to the driver by the ADAS can be executed according to the driver characteristic (for example, a habit, a character, concentration, an age, reflexes, and the like). Further, the accuracy of the warning can also be improved.

### (Modifications)

According to the vehicle control system of the present embodiment, the control unit 13 (driving assistance adjustment unit 134) has been described as adjusting the degree of driving assistance (adjusting the execution timing of the driving assistance and/or the execution intensity of the driving assistance) based on the analysis result of the execution status of the driving assistance recorded in the driving assistance status recording unit 133, but instead of the analysis, machine learning using correlation between data items recorded in the driving assistance status recording unit 133 may be used. In this case, for example, when learning that the ADAS functions at the same place, the execution timing of the notification can be advanced and/or the execution intensity can be strengthened, and it is determined that the notification is a useless warning when an avoidance action after the notification is not detected, and the execution timing of the notification can be delayed and/or the execution intensity can be weakened. Further, in a case in which the ADAS functions, it is possible to provide a service of taking over learning information in a case in which the vehicle is replaced by accumulating a type and a place (position information) in a cloud.

By using a cloud server, it is possible to reduce a burden on resources installed in the vehicle, such as a processor and a RAM, and to enable highly accurate analysis of a driving assistance execution status and adjustment of a degree of execution of the driving assistance.

According to the vehicle control system of the present embodiment, the control unit 13 (driving assistance adjustment unit 134) has been described as recording and analyzing the number-of-times of executions of the driving assistance as the execution status of the driving assistance, but instead of the number-of-times of executions, an execution rate (total number-of-times of executions/calculation slot number, the calculation slot number = vehicle travel distance/one slot distance (for example, 100 km)) calculated based on the number-of-times of executions may be recorded and analyzed.

According to the vehicle control system of the present embodiment, the driving condition of the driving assistance execution unit 132 is recorded in association with a place at the time of execution, but the execution status of each driver may be analyzed by recording the execution status in association with driver information. Providing a mechanism for guaranteeing an individual (the same person) is useful for a takeover service or the like at the time of vehicle replacement.

In the vehicle control system according to the present embodiment, the control unit 13 (driving assistance execution unit 132) has been described as executing FCW among ADAS functions as an example, but the present invention is not limited to the FCW, and the number-of-times of executions of each of advanced emergency braking system (AEBS), adaptive cruise control (ACC), lane departure warning (LDW), blind spot detection (BSD), adaptive front lighting system (AFS), traffic sign recognition (TSR), and the like can also be similarly recorded and analyzed, making it possible to adjust the driving assistance.

The present invention is not limited to the exemplary embodiment described above, and a person skilled in the art can easily change the exemplary embodiment described above to the scope included in the claims.

### REFERENCE SIGNS LIST

11 detection unit
12 surrounding sensing unit
13 control unit
14 notification unit
15 vehicle mechanism unit
16 GPS/map
17 vehicle exterior communication unit
20 CAN
130 travel control unit
131 driving assistance determination unit
132 driving assistance execution unit
133 driving assistance status recording unit
134 driving assistance adjustment unit
135 driving assistance reliability estimation unit

## Claims

1. A vehicle control system comprising:
a detection unit configured to detect an operation of a driver on a vehicle;
a surrounding sensing unit configured to sense a condition of surroundings of the vehicle; and
a control unit including a travel control unit that controls travel of the vehicle in response to the operation on the vehicle, a driving assistance determination unit that determines necessity of driving assistance to the driver according to the condition of the surroundings of the vehicle, and a driving assistance execution unit that executes the driving assistance according to a determination result of the driving assistance determination unit, wherein
the control unit includes a driving assistance adjustment unit that records and analyzes an execution status of the driving assistance execution unit and adjusts a degree of the driving assistance based on an analysis result of the execution status.

2. The vehicle control system according to claim 1, wherein
an adjustment of the degree of the driving assistance executed by the driving assistance adjustment unit is an adjustment of an execution timing of the driving assistance and/or execution intensity of the driving assistance.

3. The vehicle control system according to claim 1, wherein
the driving assistance executed by the driving assistance execution unit is a notification and/or an intervention in travel control performed by the travel control unit according to the determination result of the driving assistance determination unit.

4. The vehicle control system according to claim 1, wherein
the driving assistance adjustment unit records, as the execution status, at least a lifetime execution rate obtained by dividing a lifetime number-of-times of executions of the driving assistance executed by the driving assistance execution unit by a calculation distance unit and/or a latest execution rate obtained by dividing a latest number-of-times of executions by a calculation distance unit.

5. The vehicle control system according to claim 4, wherein
the driving assistance adjustment unit
records, as the execution status, the execution rate of the driving assistance executed by the driving assistance execution unit, and
when the execution rate of the driving assistance exceeds a first predetermined reference, advances an execution timing and/or strengthens execution intensity of the driving assistance execution unit.

6. The vehicle control system according to claim 5, wherein
when the execution rate does not exceed the first predetermined reference,
the driving assistance adjustment unit
determines whether the execution timing and/or the execution intensity of the driving assistance execution unit exceeds an initial reference, and
when the execution timing and/or the execution intensity is equal to or less than the initial reference, delays the execution timing and/or weakens the execution intensity.

7. The vehicle control system according to claim 1, wherein
the driving assistance adjustment unit
records a lifetime execution rate and/or a latest execution rate of the driving assistance as the execution status of the driving assistance execution unit,
advances an execution timing of the driving assistance and/or strengthens execution intensity of the driving assistance when the latest execution rate exceeds a first predetermined reference, and
delays the execution timing and/or weakens the execution intensity when the lifetime execution rate falls below the second predetermined reference.

8. The vehicle control system according to claim 1, wherein
the driving assistance adjustment unit
records, as the execution status, at least a lifetime execution rate obtained by dividing a lifetime number-of-times of executions of the driving assistance executed by the driving assistance execution unit by a calculation distance unit and/or a latest execution rate obtained by dividing a latest number-of-times of executions by a calculation distance unit,
when the latest execution rate exceeds a first predetermined reference, advances an execution timing of the driving assistance execution unit and/or strengthens execution intensity of the driving assistance execution unit,
when the latest execution rate does not exceed the first predetermined reference, determines whether the execution timing and/or the execution intensity exceeds an initial reference,
when the execution timing and/or the execution intensity exceeds the initial reference, delays the execution timing and/or weakens the execution intensity,
when the execution timing and/or the execution intensity does not exceed the initial reference, determines whether the lifetime execution rate falls below a second predetermined reference, and
when the lifetime execution rate falls below the second predetermined reference, weakens the execution intensity.

9. The vehicle control system according to claim 5, wherein
the driving assistance adjustment unit does not determine whether the number-of-times of executions exceeds the first predetermined reference until a travel distance or a travel time of the vehicle or the number-of-times of executions of the driving assistance execution unit exceeds a threshold.

10. The vehicle control system according to claim 1, wherein
the driving assistance adjustment unit records the execution status of the driving assistance execution unit in association with a place at the time of execution of the driving assistance execution unit, and analyzes the execution status for each place at the time of execution.

11. The vehicle control system according to claim 10, wherein
the driving assistance adjustment unit records the execution status of the driving assistance execution unit in further association with a course of the vehicle at the time of execution of the driving assistance execution unit, and analyzes the execution status of the driving assistance execution unit for each course.

12. The vehicle control system according to claim 10 or 11, wherein
the driving assistance adjustment unit records the execution status of the driving assistance execution unit in further association with a surrounding environment of the vehicle at the time of execution of the driving assistance execution unit, and analyzes the execution status of the driving assistance execution unit for each environment.

13. The vehicle control system according to claim 10, further comprising:
a driving assistance reliability estimation unit configured to estimate reliability of the determination result of the driving assistance determination unit for each place, wherein
the driving assistance adjustment unit records, as the execution status of the driving assistance execution unit, the number-of-times of executions of the driving assistance execution unit for each place together with the reliability, and when the reliability of the number-of-times of executions for each place exceeds a first predetermined reference, advances an execution timing of the driving assistance execution unit and/or strengthens execution intensity of the driving assistance execution unit.

14. The vehicle control system according to claim 10, further comprising:
a driving assistance reliability estimation unit configured to estimate reliability of the determination result of the driving assistance determination unit for each place based on the presence or absence of the operation of the driver and/or the presence or absence of a behavior of the vehicle after execution of the driving assistance execution unit, wherein
the driving assistance adjustment unit
records, as the execution status of the driving assistance execution unit, the number-of-times of executions of the driving assistance execution unit for each place together with the reliability, and
when the reliability of the number-of-times of executions for each place exceeds a first predetermined reference, advances an execution timing of the driving assistance execution unit and/or strengthens execution intensity of the driving assistance execution unit.

15. The vehicle control system according to claim 13 or 14, wherein
the driving assistance adjustment unit
when the reliability of the number-of-times of executions of the driving assistance execution unit does not exceed the first predetermined reference, determines whether the execution timing and/or the execution intensity exceeds an initial reference, and
when the execution timing and/or the execution intensity exceeds the initial reference, delays the execution timing and/or weakens the execution intensity.

16. The vehicle control system according to claim 13 or 14, wherein
the driving assistance adjustment unit
when the reliability of the number-of-times of executions does not exceed an initial reference, determines whether the reliability of the number-of-times of executions for each place is equal to or less than a second predetermined reference, and
when the reliability of the number-of-times of executions is equal to or less than the second predetermined reference, delays the execution timing and/or weakens the execution intensity.

17. The vehicle control system according to claim 1, wherein
the driving assistance adjustment unit
records all of the execution statuses without associating the execution status of the driving assistance execution unit with a place at the time of execution of the driving assistance execution unit, analyzes the driver characteristic as the execution status of the driving assistance execution unit, and
records the execution status of the driving assistance execution unit in association with the place at the time of execution of the driving assistance execution unit, and analyzes a characteristic of the driving assistance determination unit as the execution status of the driving assistance execution unit for each place.

18. The vehicle control system according to claim 17, wherein
when an analysis result of the execution status based on the driver characteristic indicates that an execution timing of the driving assistance execution unit is advanced and/or execution intensity of the driving assistance execution unit is strengthened, while an analysis result of the execution status based on the characteristic of the driving assistance determination unit indicates that the execution timing is delayed and/or the execution intensity is weakened,
the driving assistance adjustment unit finally maintains both the execution timing and the execution intensity.

19. The vehicle control system according to claim 17, wherein
the driving assistance adjustment unit
when an analysis result of the execution status based on the driver characteristic indicates that the execution timing is advanced and/or the execution intensity is strengthened, while an analysis result of the execution status based on the characteristic of the driving assistance determination unit indicates that the execution timing is maintained and/or the execution intensity is maintained, finally advances the execution timing and/or strengthens the execution intensity in a first range, and
when the analysis result of the execution status based on the driver characteristic indicates that the execution timing is advanced and/or the execution intensity is strengthened, while the analysis result of the execution status based on the characteristic of the driving assistance determination unit indicates that the execution timing is advanced and/or the execution intensity is strengthened, finally advances the execution timing and/or strengthens the execution intensity to the same extent as the first range.

20. The vehicle control system according to claim 17, wherein
the driving assistance adjustment unit
when an analysis result of the execution status based on the driver characteristic indicates that the execution timing is delayed and/or the execution intensity is weakened, while an analysis result of the execution status based on the characteristic of the driving assistance determination unit indicates that the execution timing is maintained and/or the execution intensity is maintained, finally delays the first execution timing and/or weakens the execution intensity in a first range, and
when the analysis result of the execution status based on the driver characteristic indicates that the execution timing is delayed and/or the execution intensity is weakened, while the analysis result of the execution status based on the characteristic of the driving assistance determination unit indicates that the execution timing is delayed and/or the execution intensity is weakened, finally delays the execution timing and/or weakens the execution intensity to the same extent as the first range.
